# EUROPEAN PATENT APPLICATION

(11) **EP 4 841 770 A1**
(43) Date of publication of application: **18.11.2026**
(21) Application number: 24941292.5
(22) Date of filing: 01.08.2024
(51) Int. Cl.: H01M 50/244, H01M 50/289, H01M 50/233, H01M 50/24, H01M 50/242, H01M 50/262, H01M 50/264, H01M 50/184

(54) **BATTERY CASE, BATTERY, AND ELECTRIC DEVICE**

(30) Priority: 30.05.2024 CN 202421212420 U
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/109281
(87) International publication number: WO 2025/246014

(57) **Abstract**

A battery case (20), a battery (100), and an electric device. The electric device comprises the battery case (20) or the battery (100). The battery (100) comprises the battery case (20). The battery case (20) comprises a protection plate (211), a frame (212), a sealing gasket (213), first fasteners (215), and pressing strip structures (214). The frame (212) is arranged on one side of the protection plate (211). The sealing gasket (213) presses against between the frame (212) and the protection plate (211). Each pressing strip structure (214) comprises a first wall (2141). The first wall (2141) is arranged on the side of the protection plate (211) away from the sealing gasket (213). The orthographic projection of the first wall (2141) on the protection plate (211) covers at least part of the orthographic projection of the sealing gasket (213) on the protection plate (211). Each first fastener (215) is used for sequentially passing through the corresponding first wall (2141), the protection plate (211), the sealing gasket (213), and the frame (212) in the distribution direction of the protection plate (211) and the frame (212).

## Description

### CROSS-REFERENCE TO RELATED APPLICATIONS

The present application claims priority to the Chinese patent application filed with the National Intellectual Property Administration of the People's Republic of China on May 30, 2024, with application No. 202421212420.1 and entitled "BATTERY CASE, BATTERY, AND ELECTRIC DEVICE", which is incorporated herein by reference in its entirety.

### TECHNICAL FIELD

The present application relates to the technical field of batteries, and in particular to a battery case, a battery, and an electric device.

### BACKGROUND

In the related art, a battery may include a battery case and a battery cell. The battery case may include a frame, a protective plate, and a sealing gasket. The frame is disposed on a side of the protective plate to enclose a space for accommodating the battery cell with the protective plate. The sealing gasket is pressed against between the frame and the protective plate to achieve sealing at a connection position of the frame and the protective plate.

Under a working condition involving ball impact, the protective plate is subjected to ball impact and deforms to squeeze the sealing gasket, causing the sealing effect of the sealing gasket to fail.

### SUMMARY

In view of the above problems, the purpose of the embodiments of the present application is to provide a battery case, a battery, and an electric device, to resolve the technical problem of failure of the sealing effect of the sealing gasket.

The technical solutions adopted in the embodiments of the present application are as follows:
According to a first aspect, an embodiment of the present application provides a battery case, including:
a protective plate;
a frame disposed on a side of the protective plate;
a sealing gasket pressed against between the frame and the protective plate;
a pressure bar assembly including a first wall, the first wall being disposed on a side of the protective plate distant from the sealing gasket, an orthographic projection of the first wall onto the protective plate covering at least a portion of an orthographic projection of the sealing gasket onto the protective plate; and
a first fastener configured to sequentially penetrate through the first wall, the protective plate, the sealing gasket, and the frame along a distribution direction of the protective plate and the frame.

In the battery case according to the embodiment of the present application, the pressure bar assembly is disposed on the side of the protective plate distant from the sealing gasket, and an orthographic projection of the first wall of the pressure bar assembly onto the protective plate covers at least a portion of an orthographic projection of the sealing gasket onto the protective plate, so that the pressure bar assembly may shield the portion of the protective plate facing the sealing gasket under a working condition involving external force impact such as ball impact, so as to take the place of the protective plate in directly bearing external force impact such as ball impact. In this way, the pressure bar assembly bears external force impact such as ball impact, which may reduce the external force impact borne by the portion of the protective plate facing the sealing gasket, so as to lessen the deformation generated by the portion of the protective plate facing the sealing gasket, thereby alleviating the problem that the deformation generated by the protective plate causes the sealing gasket to be over-compressed or even broken. Therefore, this helps alleviate the problem of over-compression or even breakage of the sealing gasket.

In addition, the arrangement of the first fastener, on the one hand, enables the sealing gasket to be fixed between the frame and the protective plate, so that the sealing gasket may stably achieve the sealing effect at a connection position of the frame and the protective plate; on the other hand, enables the pressure bar assembly to be fixed to the protective plate, thereby steadily alleviating the problem of failure of the sealing effect of the sealing gasket.

In some embodiments, the pressure bar assembly is provided with an inner cavity.

By providing the pressure bar assembly with an inner cavity, the pressure bar assembly can undergo a certain buffering deformation through the inner cavity under a condition of bearing external force impact, so as to absorb external force impact energy.

In some embodiments, the pressure bar assembly further includes:
a second wall connected to the first wall and enclosing the inner cavity with the first wall.

With the adoption of the above technical solution, under a working condition involving external force impact such as ball impact, the second wall may bear external force impact such as ball impact, and the first wall may distribute stress. Thanks to the stress distribution effect of the first wall, the external force impact borne by the portion of the protective plate facing the sealing gasket becomes relatively uniform, and the external force impact borne by the sealing gasket also becomes uniform correspondingly. This alleviates the problem that the portion of the protective plate facing the sealing gasket is locally subjected to a large external force impact, so as to alleviate the problem that local large deformation of the protective plate causes local over-compression or even breakage of the sealing gasket.

In some embodiments, the pressure bar assembly further includes a third wall, the third wall is connected to the second wall and encloses the inner cavity with the first wall and the second wall; and along the distribution direction of the protective plate and the frame, the third wall is spaced apart from and opposite to the first wall.

This alleviates the problem that the portion of the protective plate facing the sealing gasket is locally subjected to a large external force impact, alleviates the problem that local large deformation of the protective plate causes local over-compression or even breakage of the sealing gasket, and in turn alleviates the problem of failure of the sealing effect of the sealing gasket.

In some embodiments, an orthographic projection of the third wall onto the protective plate covers at least a portion of an orthographic projection of the sealing gasket onto the protective plate.

On the one hand, this enables the pressure bar assembly to undergo a certain buffering deformation against external force impact through the cavity; on the other hand, enables the first wall and the second wall to distribute stress effectively.

In some embodiments, the protective plate includes a central region and a peripheral region connected to the outer periphery of the central region, the sealing gasket is pressed against between the peripheral region and the frame, the first wall is disposed on a side of the peripheral region distant from the sealing gasket, and the first fastener extends through the peripheral region;
the battery case is provided with a first cross section, and the first cross section is parallel to the distribution direction of the protective plate and the frame and penetrates through the first fastener; and
on the first cross section, along the distribution direction of the peripheral region and the central region, a portion of the sealing gasket that is positioned on a side of the first fastener adjacent to the central region serves as an inner sealing region, and a portion of the sealing gasket that is positioned on a side of the first fastener distant from the central region serves as an outer sealing region;
where an orthographic projection of the first wall onto the peripheral region covers at least a portion of an orthographic projection of the inner sealing region onto the peripheral region and at least a portion of an orthographic projection of the outer sealing region onto the peripheral region.

In this way, thanks to stress distribution effect of the first wall, the external force impact borne by the portion of the peripheral region facing the inner sealing region and the external force impact borne by the portion of the peripheral region facing the outer sealing region both become uniform. This helps alleviate the problems of local over-compression or even breakage of the outer sealing region of the sealing gasket and local over-compression or even breakage of the inner sealing region, so as to alleviate the problem of failure of the sealing effect of the sealing gasket.

In some embodiments, the orthographic projection of the inner sealing region onto the peripheral region falls within the orthographic projection of the first wall onto the peripheral region.

Such an arrangement enables the first wall to distribute stress, so that when the pressure bar assembly is subjected to external force impact, the external force impact borne by the inner sealing region is distributed extremely evenly, and the inner sealing region is substantially not subjected to local external force impact. This greatly alleviates local over-compression or even deformation of the inner sealing region, and ensures that the sealing gasket achieves an excellent sealing effect.

In some embodiments, the battery case further includes a second fastener, the second fastener is connected to the frame, and the first fastener sequentially penetrates through the first wall, the protective plate, the sealing gasket, and the second fastener.

In this way, the pressure bar assembly, the protective plate, the sealing gasket, and the frame are fixed through the first fastener and the second fastener.

In some embodiments, along the distribution direction of the protective plate and the frame, at least a portion of the second fastener protrudes beyond an end of the frame adjacent to the protective plate and abuts against the protective plate; and the sealing gasket surrounds the outer periphery of the second fastener.

With the second fastener abutting against the protective plate, the second fastener may distribute stress and may achieve a certain limiting effect on the protective plate. This reduces the external force impact borne by the sealing gasket and enables the external force impact borne by the sealing gasket to be distributed extremely evenly. In this way, this helps alleviate the problem of local over-compression or even breakage of the sealing gasket, so as to improve the sealing effect of the sealing gasket.

In some embodiments, the second fastener includes a second limiting portion and a second fastening portion that are connected along the distribution direction of the protective plate and the frame, the second fastening portion is disposed inside the frame; and along the distribution direction of the protective plate and the frame, the second limiting portion is positioned at an end of the frame adjacent to the protective plate, and an end of the second limiting portion distant from the protective plate abuts against the frame.

Such an arrangement enables the second fastener to be limited on the frame along the first direction, and allows the second fastener to be firmly fixed to the frame.

In some embodiments, the first fastener includes a first limiting portion and a first fastening portion that are connected along the distribution direction of the protective plate and the frame, the first fastening portion sequentially extends through the first wall, the protective plate, the sealing gasket, and the second fastener, and is connected to the second fastener; and the first limiting portion is positioned on a side of the first wall distant from the protective plate and abuts against a side of the first wall distant from the protective plate.

Such an arrangement enables the first fastener to firmly fix the pressure bar assembly, the protective plate, the sealing gasket, and the frame.

In some embodiments, along the distribution direction of the protective plate and the frame, a side of the pressure bar assembly distant from the protective plate is provided with an accommodating groove, and the first wall is disposed at the groove bottom of the accommodating groove; and
a portion of the first fastener is accommodated in the accommodating groove, and along the distribution direction of the protective plate and the frame, a side of the pressure bar assembly distant from the protective plate protrudes beyond an end of the first fastener distant from the frame.

With the accommodating groove disposed on the side of the pressure bar assembly distant from the protective plate, the first fastener may sequentially penetrate through the first wall, the protective plate, the sealing gasket, and the frame from the accommodating groove along the first direction, which facilitates mutual fixation of the frame, the sealing gasket, the protective plate, and the pressure bar assembly of the battery case.

Along the first direction, the side of the pressure bar assembly distant from the protective plate protrudes beyond an end of the first fastener distant from the frame, so that the pressure bar assembly provides a certain protective effect for the first fastener. Accordingly, under external force impact such as ball impact, the first fastener is not directly subjected to external force impact under the protection of the pressure bar assembly. This alleviates the problem that the first fastener is directly subjected to external force impact, causing damage at the first fastener or even causing cracking of the frame and the protective plate, so as to alleviate the problem of failure of the sealing effect of the battery case.

In some embodiments, the protective plate includes a central region and a peripheral region connected to the outer periphery of the central region, the sealing gasket is pressed against between the peripheral region and the frame, the first wall is disposed on a side of the peripheral region distant from the sealing gasket, and the first fastener extends through the peripheral region;
the battery case is provided with a first cross section, and the first cross section is parallel to the distribution direction of the protective plate and the frame and penetrates through the first fastener; and
on the first cross section, along the distribution direction of the peripheral region and the central region, the accommodating groove runs through an end of the pressure bar assembly distant from the central region.

Such an arrangement enables the edge of the first wall distant from the central region to be as close to the first fastener as possible along the distribution direction of the peripheral region and the central region. This reduces the dimension of the first wall along the distribution direction of the peripheral region and the central region, so as to reduce the volume and weight of the pressure bar assembly.

In some embodiments, the pressure bar assembly is provided with an inner cavity, and a fourth wall connected to the first wall is disposed between the inner cavity and the accommodating groove.

With the fourth wall connected to the first wall, the fourth wall may also distribute stress. This helps make the external force impact borne by the portion of the protective plate facing the sealing gasket become relatively uniform, and the external force impact borne by the sealing gasket also become relatively uniform correspondingly, which helps alleviate the problem of local over-compression or even breakage of the sealing gasket.

In some embodiments, along the distribution direction of the protective plate and the frame, an end of the frame adjacent to the protective plate is provided with a support portion, and the support portion abuts against the protective plate.

With the support portion of the frame abutting against the protective plate, the frame may distribute stress and may achieve a certain limiting effect on the protective plate. This reduces the external force impact borne by the sealing gasket and enables the external force impact borne by the sealing gasket to be distributed extremely evenly. In this way, this helps alleviate the problem of local over-compression or even breakage of the sealing gasket, so as to improve the sealing effect of the sealing gasket.

In some embodiments, the protective plate includes a central region and a peripheral region connected to the outer periphery of the central region, the sealing gasket is pressed against between the peripheral region and the frame, and the pressure bar assembly is disposed on a side of the peripheral region distant from the sealing gasket;
where along the distribution direction of the protective plate and the frame, a side of the central region distant from the frame is flush with or protrudes beyond a side of the pressure bar assembly distant from the frame.

Such an arrangement enables the side of the central region distant from the frame to protrude beyond or be flush with the side of the pressure bar assembly distant from the sealing gasket, which may reduce the probability that the pressure bar assembly is subjected to external force impact, thereby helping improve the sealing effect of the sealing gasket to a certain extent.

According to a second aspect, an embodiment of the present application provides a battery, including a battery case.

The battery according to this embodiment of the present application adopts the above-described battery case, which helps improve the sealing effect of the battery.

According to a third aspect, an embodiment of the present application provides an electric device, including a battery case or a battery.

The electric device according to this embodiment of the present application adopts the above-described battery case or battery, which helps improve the sealing effect of the battery, boosts the reliability of the battery, and in turn raises the reliability of the electric device.

The foregoing description merely serves as an overview of the technical solutions of the present application. To gain a clearer understanding of the technical means of the present application, the technical means can be implemented in accordance with the content of the description. Furthermore, to render the above and other purposes, features, and advantages of the present application more apparent, the specific embodiments of the present application are specifically listed below.

### BRIEF DESCRIPTION OF DRAWINGS

In order to more clearly illustrate the technical solutions in the embodiments of the present application, the accompanying drawings required to be used in the embodiments or exemplary technical descriptions will be briefly introduced below. Obviously, the accompanying drawings in the following description are only some embodiments of the present application. For those of ordinary skill in the art, other drawings can also be obtained according to these drawings without undertaking inventive work.
FIG. 1 is a schematic diagram of a vehicle according to some embodiments of the present application;
FIG. 2 is an exploded schematic view of a battery according to some embodiments of the present application;
FIG. 3 is a schematic diagram of a battery according to some embodiments of the present application;
FIG. 4 is a cross-sectional view of FIG. 3 along A-A;
FIG. 5 is an enlarged view of region B in FIG. 4;
FIG. 6 is a three-dimensional structural view of a pressure bar assembly of a battery according to some embodiments of the present application;
FIG. 7 is an enlarged view of region C in FIG. 6;
FIG. 8 is a partial structural diagram of a pressure bar assembly of a battery according to some other embodiments of the present application; and
FIG. 9 is a partial cross-sectional view of a battery according to still other embodiments of the present application.

The reference signs in the figures are:
1000: vehicle; 100: battery; 200: controller; 300: motor; 10: battery cell; 20: battery case; 201: inner cavity; 202: accommodating groove; 203: first mounting hole; 204: second mounting hole; 205: third mounting hole; 206: fourth mounting hole; 21: first section; 22: second section; 211: protective plate; 2111: central region; 2112: peripheral region; 212: frame; 2121: support portion; 213: sealing gasket; 2131: inner sealing region; 2132: outer sealing region; 214: pressure bar assembly; 2141: first wall; 2142: second wall; 2143: third wall; 2144: fourth wall; 215: first fastener; 2151: first fastening portion; 2152: first limiting portion; 216: second fastener; 2161: second fastening portion; 2162: second limiting portion; a: first cross section; Z: first direction; and X: second direction.

### DESCRIPTION OF EMBODIMENTS

The embodiments of the present application are described in detail below. Examples of the embodiments are shown in the accompanying drawings, where the same or similar reference signs throughout represent the same or similar elements or elements with the same or similar functions. The embodiments described below with reference to the accompanying drawings are exemplary and are intended to explain the present application, and should not be construed as limiting the present application.

In the description of the present application, it should be understood that the terms "length", "width", "upper", "lower", "front", "rear", "left", "right", "vertical", "horizontal", "top", "bottom", "inner", "outer", and the like indicate orientations or positional relationships based on the orientations or positional relationships shown in the accompanying drawings, and are only for the convenience of describing the present application and simplifying the description, rather than indicating or implying that the referred device or element must have a specific orientation, be constructed and operated in a specific orientation, and therefore cannot be understood as a limitation on the present application.

In addition, the terms "first" and "second" are used for descriptive purposes only and cannot be understood as indicating or implying relative importance or implicitly indicating the number of indicated technical features. Thus, a feature defined as "first" or "second" may explicitly or implicitly include one or more of the features.

In the description of the present application, the meaning of "plurality" is two or more, unless otherwise clearly and specifically limited, and "two or more" includes two. Accordingly, the meaning of "multiple groups" is two or more groups, including two groups.

In the description of the present application, unless otherwise clearly specified and limited, the terms "mount", "connect", "link", "fix" and other terms should be understood in a broad sense. For example, it may be a fixed connection, a detachable connection, or an integral connection; it may be a mechanical connection or an electrical connection; it may be a direct connection or an indirect connection through an intermediate medium, and it may be the internal communication of two elements or the interaction relationship between two elements. For those of ordinary skill in the art, the specific meanings of the above terms in the present application can be understood according to specific circumstances.

In the description of the present application, the term "and/or" is only a description of an association relationship of associated objects, indicating that three relationships can exist. For example, A and/or B may mean: A exists alone, A and B exist at the same time, and B exists alone. In addition, in the present application, the character "/" generally indicates that the front and rear associated objects are in an "or" relationship.

Although the present application has been described with reference to the preferred embodiments, various improvements can be made and components therein may be replaced with equivalents without departing from the scope of the present application. In particular, as long as there is no structural conflict, the technical features mentioned in various embodiments may be combined in any manner. The present application is not limited to the specific embodiments disclosed herein, but includes all technical solutions falling within the scope of the claims.

In the related art, a battery may be a single physical module including one or more battery cells to provide higher voltage and capacity. When there are multiple battery cells, the multiple battery cells are connected in series, parallel, or hybrid connection through a busbar component, and hybrid connection means that there are both series and parallel connections among the multiple battery cells.

The battery may include a battery case and a battery cell, and the battery cell is accommodated in the battery case. The battery case may include a frame, a protective plate, and a sealing gasket. The frame is disposed on a side of the protective plate to enclose with the protective plate a space for accommodating the battery cell. The sealing gasket is pressed against between the frame and the protective plate to achieve sealing at a connection position of the frame and the protective plate.

Under a working condition involving ball impact, the protective plate is subjected to ball impact and deforms to squeeze the sealing gasket, causing the sealing gasket to be over-compressed or even broken, resulting in failure of the sealing effect of the sealing gasket.

In particular, under a working condition involving ball impact, the protective plate is generally locally subjected to ball impact and deforms. In this way, under the local deformation of the protective plate, the sealing gasket will be locally over-compressed or even broken. In other words, localized impact on the sealing gasket results in over-compression or even breakage and ultimately causes failure of the sealing effect of the sealing gasket.

Based on the above considerations, the embodiments of the present application provide a battery case, a battery, and an electric device. A pressure bar assembly is disposed on a side of the protective plate distant from the sealing gasket, and an orthographic projection of the pressure bar assembly onto the protective plate covers at least a portion of an orthographic projection of the sealing gasket onto the protective plate, so that the pressure bar assembly may shield the portion of the protective plate facing the sealing gasket under a working condition involving ball impact, to bear the ball impact. In this way, the impact borne by the portion of the protective plate facing the sealing gasket may be alleviated, so as to lessen the deformation generated by the portion of the protective plate facing the sealing gasket, thereby helping alleviate the problem of over-compression or even breakage of the sealing gasket, so as to alleviate the problem of failure of the sealing effect of the sealing gasket.

In some embodiments, the battery case involved in the embodiments of the present application may be applied to an electric device that uses a battery as a power source.

The electric device involved in the embodiments of the present application may be, but is not limited to, a mobile phone, a tablet, a laptop computer, an electric toy, an electric tool, an electric bicycle, a vehicle, a watercraft, and a spacecraft. The electric toy may include a fixed or mobile electric toy, for example, a game console, an electric car toy, an electric ship toy, or an electric airplane toy. The spacecraft may include an airplane, a rocket, a space shuttle, a spaceship, and the like. Classified by power source, the vehicle may be a fuel vehicle, a gas vehicle, or a new energy vehicle, and the new energy vehicle may be a battery electric vehicle, a hybrid electric vehicle, an extended-range electric vehicle, or the like. Classified by driving mode, the vehicle may be a front-wheel drive vehicle, a rear-wheel drive vehicle, or a four-wheel drive vehicle.

In some other embodiments, the battery case involved in the embodiments of the present application may be applied to an energy storage system that uses a battery as an energy storage element. The energy storage system may include an energy storage container, an energy storage cabinet, and the like.

For the convenience of description, the embodiments of the present application are described by taking an electric device as a vehicle as an example.

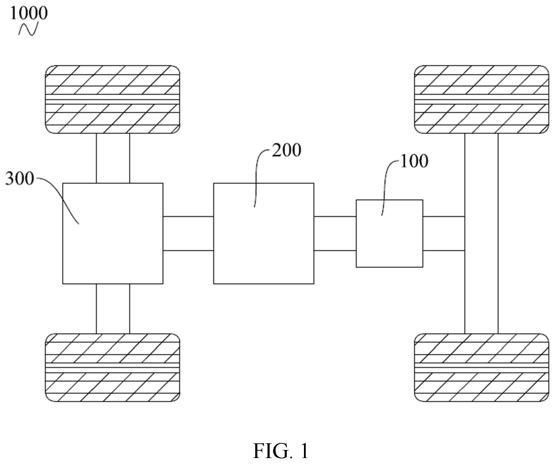

In some embodiments, referring to FIG. 1, FIG. 1 is a schematic diagram of a vehicle 1000 according to some embodiments of the present application. The interior of the vehicle 1000 is provided with the above-mentioned battery 100, and the battery 100 may be disposed at the bottom, front, or rear of the vehicle 1000. The battery 100 may be used for power supply of the vehicle 1000. For example, the battery 100 may serve as an operating power source of the vehicle 1000. The vehicle 1000 may further include a controller 200 and a motor 300. The controller 200 is configured to control the battery 100 to supply power to the motor 300, for example, to meet the working power requirements during starting, navigation, and driving of the vehicle 1000.

In some embodiments, the battery 100 can not only serve as an operating power source of the vehicle 1000, but also serve as a traction power source of the vehicle 1000, replacing or partially replacing fuel or natural gas to provide driving power for the vehicle 1000.

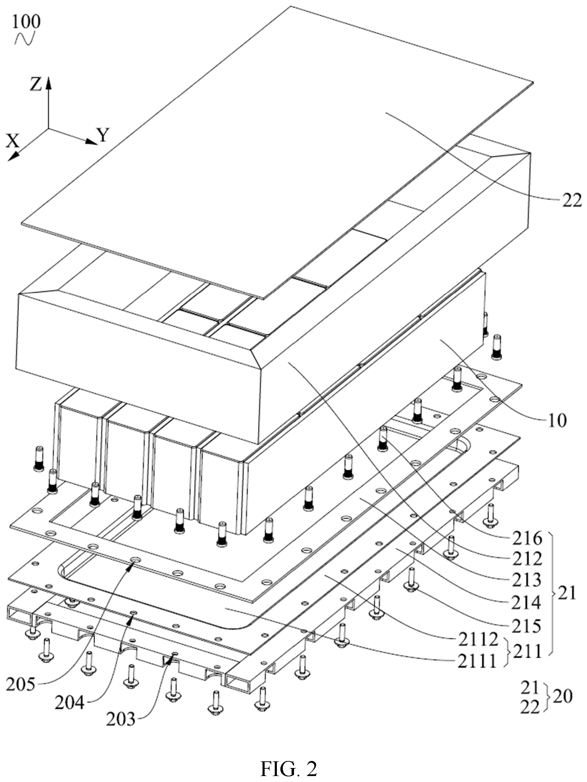

In some embodiments, referring to FIG. 2 and with reference to other drawings, FIG. 2 is an exploded schematic view of a battery 100 according to some embodiments of the present application. The battery 100 may include a battery case 20 and a plurality of battery cells 10. The battery case 20 is a structure with an internal space, and the internal space of the battery case 20 is used to accommodate the battery cells 10.

The battery case 20 may adopt various structures. In some embodiments, the battery case 20 may include a first section 21 and a second section 22. The first section 21 and the second section 22 cover each other and jointly define the internal space of the battery case 20. Referring to FIG. 2 and in conjunction with other drawings, the first section 21 may be a hollow structure with an opening at one end, the second section 22 is a plate-like structure, and the second section 22 covers the opening side of the first section 21, so that the first section 21 and the second section 22 jointly define the internal space of the battery case 20; or both the first section 21 and the second section 22 may be hollow structures with an opening at one end, and the opening side of the first section 21 covers the opening side of the second section 22, so that the first section 21 and the second section 22 jointly define the internal space of the battery case 20.

The battery case 20 composed of the first section 21 and the second section 22 may have various shapes, such as cylindrical and cuboidal shapes.

In some embodiments, referring to FIG. 2, a plurality of battery cells 10 may be fixed by straps or the like to form an integrated assembly, and then the whole formed by the plurality of battery cells 10 is directly accommodated in the internal space of the battery case 20. In other embodiments, the plurality of battery cells 10 may also be first connected in series, parallel, or hybrid connection, and arranged and fixed to form a battery module, and the battery module is accommodated in the internal space of the battery case 20. In still some other embodiments, the plurality of battery cells 10 may also be first connected in series, parallel, or hybrid connection, and arranged and fixed to form a plurality of battery modules, and the plurality of battery modules are then connected in series, parallel, or hybrid connection to form an integrated assembly, and accommodated in the internal space of the battery case 20.

As an example, the plurality of battery cells 10 may be fixed by straps or the like to form a battery module. As an example, the plurality of battery cells 10 may also be fixed by end plates, side plates, or the like to assemble a battery module.

In some embodiments, the battery case 20 of the battery 100 may serve as a portion of the chassis structure of the vehicle 1000. For example, a portion of the battery case 20 may become at least a portion of the chassis of the vehicle 1000, or a portion of the battery case 20 may become at least a portion of the cross beams and longitudinal beams of the vehicle 1000.

The battery cell involved in the embodiments of the present application refers to the smallest unit that stores and outputs electric energy. The battery cell may be a secondary battery or a primary battery. The battery cell may be, but is not limited to, a metal battery, a lithium-sulfur battery, a sodium-ion battery, or a magnesium-ion battery. The battery cell may be in the shape of a cylinder, a flat body, a cuboid, or other shapes.

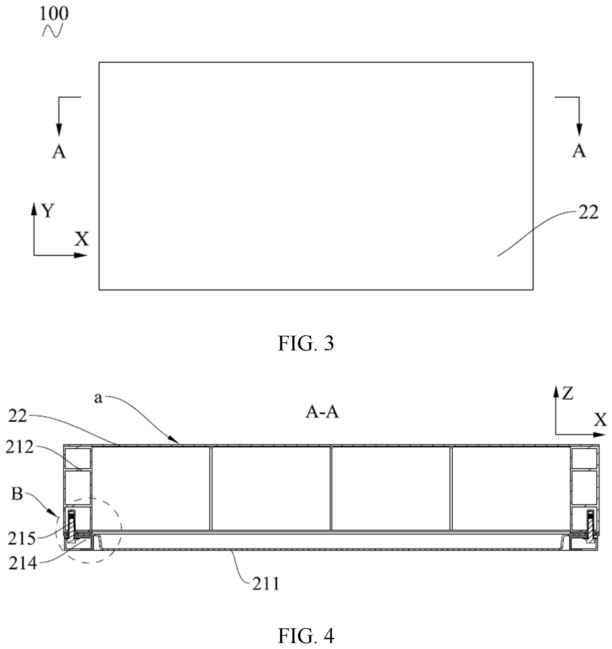

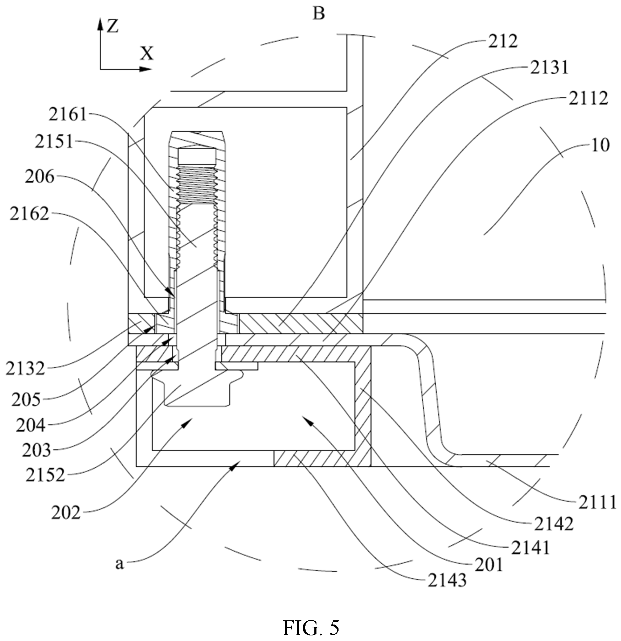

Referring to FIGs. 2 to 5 together and with reference to other drawings, FIG. 3 is a schematic diagram of a battery 100 according to some embodiments of the present application, specifically a schematic diagram of the battery 100 from the perspective of the first direction Z involved below, which can be understood as a top view of the battery 100. FIG. 4 is a cross-sectional view of FIG. 3 along A-A, and FIG. 5 is an enlarged view of region B in FIG. 4. The battery case 20 according to the embodiment of the present application includes a protective plate 211, a frame 212, a sealing gasket 213, a first fastener 215, and a pressure bar assembly 214. The frame 212 is disposed on a side of the protective plate 211. The sealing gasket 213 is pressed against between the frame 212 and the protective plate 211. The pressure bar assembly 214 includes a first wall 2141. The first wall 2141 is disposed on a side of the protective plate 211 distant from the sealing gasket 213. An orthographic projection of the first wall 2141 onto the protective plate 211 covers at least a portion of an orthographic projection of the sealing gasket 213 onto the protective plate 211. The first fastener 215 is configured to sequentially penetrate through the first wall 2141, the protective plate 211, the sealing gasket 213, and the frame 212 along a distribution direction of the protective plate 211 and the frame 212.

For the convenience of description, the distribution direction of the protective plate 211 and the frame 212 is first set as the first direction Z herein. In some cases, the first direction Z may be a height direction of the battery 100.

Based on the above structure, it can be understood that, as shown in FIGs. 2 to 5, the first section 21 of the battery case 20 may include the above-mentioned protective plate 211, frame 212, sealing gasket 213, and pressure bar assembly 214. One or more frames 212 may enclose a through-going structure extending along the first direction Z. Along the first direction Z, the protective plate 211 is disposed at an end of the frame 212. In this way, the frame 212 and the protective plate 211 may enclose a hollow structure with an opening at one end.

Along the first direction Z, the second section 22 of the battery case 20 is disposed at an end of the frame 212 distant from the protective plate 211, and the second section 22 and the protective plate 211 are arranged opposite to each other. In this way, the protective plate 211, the frame 212, and the second section 22 enclose the internal space of the battery case 20.

The protective plate 211 may constitute a bottom wall of the internal space of the battery case 20, and the second section 22 may constitute a top wall of the internal space of the battery case 20. The frame 212 is a frame of the battery case 20 and may constitute the peripheral wall of the internal space of the battery case 20.

The sealing gasket 213 refers to a structure with sealing performance. The sealing gasket 213 may adopt a structure with sealing performance such as a rubber gasket or a silicone gasket.

The sealing gasket 213 is pressed against between the frame 212 and the protective plate 211, which means that in the first direction Z, the sealing gasket 213 is arranged between the frame 212 and the protective plate 211, and an end of the sealing gasket 213 adjacent to the frame 212 is pressed against the frame 212, and an end of the sealing gasket 213 adjacent to the protective plate 211 is pressed against the protective plate 211. In this way, the sealing gasket 213 may be in a compressed state under the combined clamping force from the frame 212 and the protective plate 211, thereby achieving the sealing effect at a connection position of the protective plate 211 and the frame 212.

The pressure bar assembly 214 refers to a structure disposed on the protective plate 211 for resisting external force to mitigate the deformation of the protective plate 211 subjected to external force impact. The first wall 2141 is a solid wall of the pressure bar assembly 214.

Along the first direction Z, the first wall 2141 of the pressure bar assembly 214 is disposed on a side of the protective plate 211 distant from the sealing gasket 213. In this way, the frame 212, the sealing gasket 213, the protective plate 211, and the first wall 2141 of the pressure bar assembly 214 are sequentially distributed along the first direction Z.

The orthographic projection of the first wall 2141 onto the protective plate 211 is a projection of the first wall 2141 projected onto the protective plate 211 along the first direction Z. The first wall 2141 and the protective plate 211 are arranged opposite to each other along the first direction Z.

At least a portion of the orthographic projection of the sealing gasket 213 onto the protective plate 211 is at least a portion of the projection of the sealing gasket 213 projected onto the protective plate 211 along the first direction Z. The sealing gasket 213 and the protective plate 211 are arranged opposite to each other along the first direction Z.

The orthographic projection of the first wall 2141 onto the protective plate 211 covers at least a portion of the orthographic projection of the sealing gasket 213 onto the protective plate 211, so that the portion of the protective plate 211 facing the sealing gasket 213 along the first direction Z is also disposed opposite to the first wall 2141 along the first direction Z, thereby enabling at least a portion of the first wall 2141 and at least a portion of the sealing gasket 213 to be arranged opposite to each other along the first direction Z through the protective plate 211.

The first fastener 215 refers to a component used for fastening, such as a bolt or a rivet.

Along the first direction Z, the first fastener 215 sequentially penetrates through the first wall 2141, the protective plate 211, the sealing gasket 213, and the frame 212, which can fix the first wall 2141, the protective plate 211, the sealing gasket 213, and the frame 212, so that the first wall 2141, the protective plate 211, the sealing gasket 213, and the frame 212 are fixed through the first fastener 215.

The first fastener 215 sequentially penetrates through the first wall 2141, the protective plate 211, the sealing gasket 213, and the frame 212, and the first fastener 215 is at least fixed to the frame 212, so that the first wall 2141, the protective plate 211, the sealing gasket 213, and the frame 212 are fixed. As an example, the frame 212 is provided with a second fastener 216 involved below, and the first fastener 215 is fixed to the second fastener 216 disposed on the frame 212, so as to be indirectly fixed to the frame 212.

The first fastener 215 sequentially penetrates through the first wall 2141, the protective plate 211, the sealing gasket 213, and the frame 212, so that the first wall 2141, the protective plate 211, the sealing gasket 213, and the frame 212 are sequentially distributed along the first direction Z. The first wall 2141 may abut against the portion of the protective plate 211 facing the sealing gasket 213, and other intermediate components may also be provided between the first wall 2141 and the protective plate 211, where the other intermediate components may be, but are not limited to, gaskets.

In the battery case 20 according to the embodiment of the present application, the first wall 2141 of the pressure bar assembly 214 is disposed on the side of the protective plate 211 distant from the sealing gasket 213, and the orthographic projection of the first wall 2141 of the pressure bar assembly 214 onto the protective plate 211 covers at least a portion of the orthographic projection of the sealing gasket 213 onto the protective plate 211, so that the pressure bar assembly 214 may shield the portion of the protective plate 211 facing the sealing gasket 213 under a working condition involving external force impact such as ball impact, so as to take the place of the protective plate 211 in directly bearing external force impact such as ball impact. In this way, the pressure bar assembly 214 bears external force impact such as ball impact, which may reduce the external force impact borne by the portion of the protective plate 211 facing the sealing gasket 213, so as to lessen the deformation generated by the portion of the protective plate 211 facing the sealing gasket 213, thereby alleviating the problem that the deformation generated by the protective plate 211 causes the sealing gasket 213 to be over-compressed or even broken. Therefore, this helps alleviate the problem of over-compression or even breakage of the sealing gasket 213, and in particular, helps alleviate the problem of local over-compression or even breakage of the sealing gasket 213. Thus, the problem of failure of the sealing effect of the sealing gasket 213 can be alleviated.

Specifically, the first wall 2141 is disposed on a side of the protective plate 211 distant from the sealing gasket 213, and the first fastener 215 sequentially penetrates through the first wall 2141, the protective plate 211, the sealing gasket 213, and the frame 212, so the first wall 2141 is fixed to the portion of the protective plate 211 facing the sealing gasket 213 by the first fastener 215. In this way, the first wall 2141 may distribute stress, so that the external force impact borne by the portion of the protective plate 211 facing the sealing gasket 213 becomes relatively uniform, and the external force impact borne by the sealing gasket 213 becomes uniform correspondingly. This alleviates the problem that the portion of the protective plate 211 facing the sealing gasket 213 is locally subjected to a large external force impact, alleviates the problem that local large deformation of the protective plate 211 causes local over-compression or even breakage of the sealing gasket 213, and improves the sealing effect of the sealing gasket 213.

In addition, the arrangement of the first fastener 215, on the one hand, enables the sealing gasket 213 to be fixed between the frame 212 and the protective plate 211, so that the sealing gasket 213 may stably achieve the sealing effect at a connection position of the frame 212 and the protective plate 211; on the other hand, enables the pressure bar assembly 214 to be fixed to the protective plate 211, thereby steadily alleviating the problem of failure of the sealing effect of the sealing gasket 213.

As shown in FIGs. 2 to 5, along the first direction Z, the first wall 2141 is provided with a first mounting hole 203, the protective plate 211 is provided with a second mounting hole 204, the sealing gasket 213 is provided with a third mounting hole 205, and the first fastener 215 sequentially penetrates through the first mounting hole 203, the second mounting hole 204, the third mounting hole 205, and the frame 212 to achieve mutual fixation of the pressure bar assembly 214, the protective plate 211, the sealing gasket 213, and the frame 212.

In some embodiments, referring to FIGs. 2 to 5 together and with reference to other drawings, the pressure bar assembly 214 is provided with an inner cavity 201.

The pressure bar assembly 214 is provided with an inner cavity 201, which means that a space is provided inside the pressure bar assembly 214.

By providing the pressure bar assembly 214 with an inner cavity 201, the pressure bar assembly 214 can undergo a certain buffering deformation through the inner cavity 201 under a condition of bearing external force impact, so as to absorb external force impact energy. Therefore, the external force impact borne by the protective plate 211 can be reduced to lessen the deformation generated by the portion of the protective plate 211 facing the sealing gasket 213, thereby effectively alleviating the problem that the deformation generated by the protective plate 211 causes the sealing gasket 213 to be over-compressed or even broken, so as to improve the sealing effect of the sealing gasket 213.

In some embodiments, referring to FIGs. 2 to 5 together and with reference to other drawings, the pressure bar assembly 214 further includes a second wall 2142. The second wall 2142 is connected to the first wall 2141, and the second wall 2142 and the first wall 2141 enclose the inner cavity 201.

The first wall 2141 and the second wall 2142 are two solid walls of the pressure bar assembly 214, respectively.

With the adoption of the above technical solution, under a working condition involving external force impact such as ball impact, the second wall 2142 may bear external force impact such as ball impact, and the first wall 2141 may distribute stress. Thanks to the stress distribution effect of the first wall 2141, the external force impact borne by the portion of the protective plate 211 facing the sealing gasket 213 becomes relatively uniform, and the external force impact borne by the sealing gasket 213 also becomes uniform correspondingly. This alleviates the problem that the portion of the protective plate 211 facing the sealing gasket 213 is locally subjected to a large external force impact, and alleviates the problem that local large deformation of the protective plate 211 causes local over-compression or even breakage of the sealing gasket 213.

In some embodiments, referring to FIGs. 2 to 5 together and with reference to other drawings, the pressure bar assembly 214 further includes a third wall 2143. The third wall 2143 is connected to the second wall 2142, and the first wall 2141, the second wall 2142, and the third wall 2143 enclose the inner cavity 201. Along the distribution direction of the protective plate 211 and the frame 212, the third wall 2143 is spaced apart from and opposite to the first wall 2141.

The third wall 2143 is a solid wall of the pressure bar assembly 214.

As an example, along the first direction Z, the third wall 2143 is connected to an end of the second wall 2142 distant from the first wall 2141.

The third wall 2143 is spaced from and opposite to the first wall 2141, under a working condition involving external force impact such as ball impact, the third wall 2143 may first bear the external force impact and perform a certain buffering deformation, so that the pressure bar assembly 214 may absorb external force impact energy through the cavity to reduce the external force impact borne by the protective plate 211 and reduce the external force impact borne by the sealing gasket 213. Moreover, the first wall 2141 and the second wall 2142 may distribute stress, so that the external force impact borne by the portion of the protective plate 211 facing the sealing gasket 213 becomes relatively uniform, and the external force impact borne by the sealing gasket 213 may also become uniform correspondingly. This alleviates the problem that the portion of the protective plate 211 facing the sealing gasket 213 is locally subjected to a large external force impact, alleviates the problem that local large deformation of the protective plate 211 causes local over-compression or even breakage of the sealing gasket 213, and in turn alleviates the problem of failure of the sealing effect of the sealing gasket 213.

In some embodiments, referring to FIGs. 2 to 5 together and with reference to other drawings, an orthographic projection of the third wall 2143 onto the protective plate 211 covers at least a portion of an orthographic projection of the sealing gasket 213 onto the protective plate 211.

It can be understood that the portion of the protective plate 211 facing the sealing gasket 213 is disposed opposite to the first wall 2141 and is also disposed opposite to the third wall 2143.

With the adoption of the above technical solution, the third wall 2143 may shield the portion of the protective plate 211 facing the sealing gasket 213 and the first wall 2141, thereby bearing external force impact such as ball impact. On the one hand, this enables the pressure bar assembly 214 to undergo a certain buffering deformation against external force impact through the cavity; on the other hand, enables the first wall 2141 and the second wall 2142 to distribute stress effectively. This alleviates the problem that the portion of the protective plate 211 facing the sealing gasket 213 is locally subjected to a large external force impact, alleviates the problem that local large deformation of the protective plate 211 causes local over-compression or even breakage of the sealing gasket 213, and in turn alleviates the problem of failure of the sealing effect of the sealing gasket 213.

In some embodiments, referring to FIGs. 2 to 5 together and with reference to other drawings, the protective plate 211 includes a central region 2111 and a peripheral region 2112. The peripheral region 2112 surrounds the outer periphery of the central region 2111 and is connected to the central region 2111. The sealing gasket 213 is pressed against between the peripheral region 2112 and the frame 212, and the first wall 2141 is disposed on a side of the peripheral region 2112 distant from the sealing gasket 213.

The central region 2111 and the peripheral region 2112 are two portions of the protective plate 211. Along the first direction Z, the frame 212 is disposed on a side of the peripheral region 2112, the sealing gasket 213 is pressed against between the peripheral region 2112 and the frame 212, and the first wall 2141 is disposed on a side of the peripheral region 2112 distant from the sealing gasket 213.

In some embodiments, referring to FIGs. 2 to 5 together and with reference to other drawings, the first fastener 215 penetrates through the peripheral region 2112. Specifically, along the first direction Z, the first fastener 215 sequentially penetrates through the first wall 2141, the peripheral region 2112, the sealing gasket 213, and the frame 212 to achieve mutual fixation of the pressure bar assembly 214, the protective plate 211, the sealing gasket 213, and the frame 212.

In some embodiments, as shown in FIG. 4 and FIG. 5, the battery case 20 is provided with a first cross section a. The first cross section a is parallel to the distribution direction of the protective plate 211 and the frame 212 and penetrates through the first fastener 215. In FIG. 4, the cross-sectional view of the battery 100 coincides with the view of the first cross section a, and the first cross section a of the battery case 20 may refer to FIG. 4.

In some embodiments, as shown in FIG. 4 and FIG. 5, on the first cross section a, the sealing gasket 213 includes an inner sealing region 2131 and an outer sealing region 2132. Along the distribution direction of the peripheral region 2112 and the central region 2111, a portion of the sealing gasket 213 that is positioned on a side of the first fastener 215 adjacent to the central region 2111 serves as an inner sealing region 2131, and a portion of the sealing gasket 213 that is positioned on a side of the first fastener 215 distant from the central region 2111 serves as an outer sealing region 2132.

The inner sealing region 2131 and the outer sealing region 2132 are two portions of the sealing gasket 213, both of which have sealing performance.

Specifically, along the distribution direction of the peripheral region 2112 and the central region 2111, the inner sealing region 2131 and the outer sealing region 2132 are respectively located on opposite two sides of the first fastener 215. Along the first direction Z, the inner sealing region 2131 is pressed against between the frame 212 and the peripheral region 2112, and the outer sealing region 2132 is pressed against between the frame 212 and the peripheral region 2112. In this way, the sealing gasket 213 may surround the outer periphery of the first fastener 215 and is pressed against between the frame 212 and the peripheral region 2112, thereby achieving a favorable sealing effect between the frame 212 and the peripheral region 2112.

For the convenience of description, the distribution direction of the peripheral region 2112 and the central region 2111 on the first cross section a may be defined as the second direction X. That is, the first cross section a is parallel to the first direction Z and the second direction X.

For the convenience of description, a spatial coordinate system may be established in FIG. 2, where the X-axis, Y-axis, and Z-axis are the three coordinate axes of the spatial coordinate system, the X-axis is perpendicular to the Y-axis, the X-axis is perpendicular to the Z-axis, and the Y-axis is perpendicular to the Z-axis. The first direction Z is parallel to the Z-axis. On one of the first cross sections a, the second direction X may be parallel to the X-axis.

In some embodiments, referring to FIGs. 2 to 5 together and with reference to other drawings, the orthographic projection of the first wall 2141 onto the peripheral region 2112 covers at least a portion of the orthographic projection of the inner sealing region 2131 onto the peripheral region 2112 and at least a portion of the orthographic projection of the outer sealing region 2132 onto the peripheral region 2112.

The orthographic projection of the first wall 2141 onto the peripheral region 2112 is a projection of the first wall 2141 projected onto the peripheral region 2112 along the first direction Z. The first wall 2141 and the peripheral region 2112 are arranged opposite to each other along the first direction Z.

At least a portion of the orthographic projection of the inner sealing region 2131 onto the peripheral region 2112 is at least a portion of the projection of the inner sealing region 2131 projected onto the peripheral region 2112 along the first direction Z. The inner sealing region 2131 and the peripheral region 2112 are arranged opposite to each other along the first direction Z.

At least a portion of the orthographic projection of the outer sealing region 2132 onto the peripheral region 2112 is at least a portion of the projection of the outer sealing region 2132 projected onto the peripheral region 2112 along the first direction Z. The outer sealing region 2132 and the peripheral region 2112 are arranged opposite to each other along the first direction Z.

With the adoption of the above technical solution, the first wall 2141 is arranged on the portion of the peripheral region 2112 facing the inner sealing region 2131 and on the portion of the peripheral region 2112 facing the outer sealing region 2132. In this way, thanks to stress distribution effect of the first wall 2141, the external force impact borne by the portion of the peripheral region 2112 facing the inner sealing region 2131 and the external force impact borne by the portion of the peripheral region 2112 facing the outer sealing region 2132 both become uniform. This helps alleviate the problems of local over-compression or even breakage of the outer sealing region 2132 of the sealing gasket 213 and local over-compression or even breakage of the inner sealing region 2131, so as to alleviate the problem of failure of the sealing effect of the sealing gasket 213.

In some embodiments, referring to FIGs. 2 to 5 together and with reference to other drawings, the orthographic projection of the inner sealing region 2131 onto the peripheral region 2112 falls within the orthographic projection of the first wall 2141 onto the peripheral region 2112.

It can be understood that the orthographic projection of the first wall 2141 onto the peripheral region 2112 completely covers the orthographic projection of the inner sealing region 2131 onto the peripheral region 2112, so that all portions of the peripheral region 2112 facing the inner sealing region 2131 are completely arranged opposite to the first wall 2141.

Such an arrangement enables the first wall 2141 to distribute stress, so that when the pressure bar assembly 214 is subjected to external force impact, the external force impact borne by the inner sealing region 2131 is distributed extremely evenly, and the inner sealing region 2131 is substantially not subjected to local external force impact. This greatly alleviates local over-compression or even deformation of the inner sealing region 2131, and ensures that the sealing gasket 213 achieves an excellent sealing effect.

In some embodiments, referring to FIGs. 2 to 5 together and with reference to other drawings, the battery case 20 further includes a second fastener 216. The second fastener 216 is connected to the frame 212, and the first fastener 215 sequentially penetrates through the first wall 2141, the protective plate 211, the sealing gasket 213, and the second fastener 216.

The second fastener 216 refers to a component disposed on the frame 212 for fixed connection with the first fastener 215.

Along the first direction Z, the first fastener 215 sequentially penetrates through the first wall 2141, the protective plate 211, the sealing gasket 213, and the second fastener 216, so that the pressure bar assembly 214, the protective plate 211, the sealing gasket 213, and the frame 212 are fixed through the first fastener 215 and the second fastener 216.

The second fastener 216 is connected to the frame 212, and the first fastener 215 penetrates through the second fastener 216, so that the first fastener 215 also penetrates through the frame 212 correspondingly. As an example, as shown in FIGs. 2 to 5, along the first direction Z, an end of the second fastener 216 adjacent to the protective plate 211 is provided with a fourth mounting hole 206, and the first fastener 215 sequentially passes through the first mounting hole 203, the second mounting hole 204, the third mounting hole 205, and the fourth mounting hole 206 to achieve mutual fixation of the frame 212, the sealing gasket 213, the protective plate 211, and the pressure bar assembly 214 of the battery case 20.

In some embodiments, referring to FIGs. 2 to 5 together and with reference to other drawings, along the distribution direction of the protective plate 211 and the frame 212, at least a portion of the second fastener 216 protrudes beyond an end of the frame 212 adjacent to the protective plate 211 and abuts against the protective plate 211. The sealing gasket 213 surrounds the outer periphery of the second fastener 216.

With the second fastener 216 abutting against the protective plate 211, the second fastener 216 may distribute stress and may achieve a certain limiting effect on the protective plate 211. This reduces the external force impact borne by the sealing gasket 213 and enables the external force impact borne by the sealing gasket 213 to be distributed extremely evenly. In this way, this helps alleviate the problem of local over-compression or even breakage of the sealing gasket 213, so as to improve the sealing effect of the sealing gasket 213.

In some embodiments, referring to FIGs. 2 to 5 together and with reference to other drawings, the second fastener 216 includes a second limiting portion 2162 and a second fastening portion 2161 that are sequentially connected along the first direction Z. The second fastening portion 2161 is disposed inside the frame 212. Along the first direction Z, the second limiting portion 2162 is positioned at an end of the frame 212 adjacent to the protective plate 211. That is, the second limiting portion 2162 is a portion of the second fastener 216 that protrudes beyond an end of the frame 212 adjacent to the protective plate 211. Moreover, along the first direction Z, an end of the second limiting portion 2162 distant from the protective plate 211 abuts against the frame 212.

Such an arrangement enables the second fastener 216 to be limited on the frame 212 along the first direction Z, and allows the second fastener 216 to be firmly fixed to the frame 212.

It should be additionally explained herein that the fourth mounting hole 206 of the second fastener 216 is formed sequentially through the second limiting portion 2162 and the second fastening portion 2161 along the first direction Z.

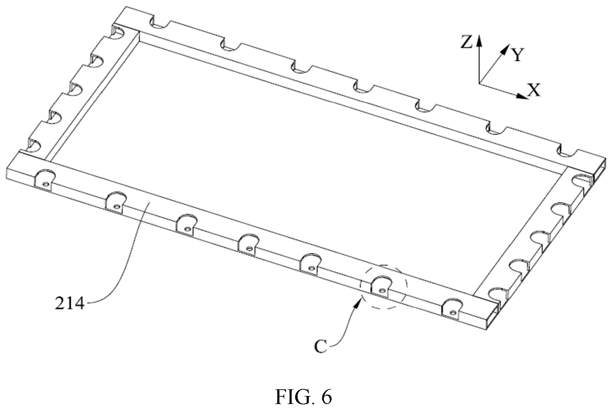

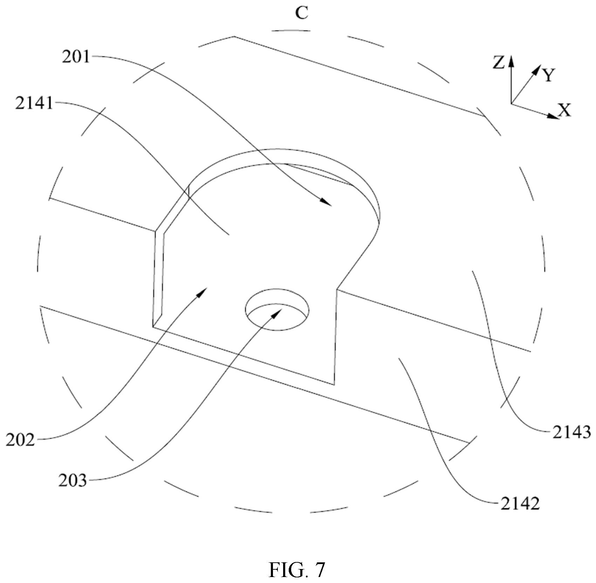

In some embodiments, referring to FIGs. 2 to 7 together and with reference to other drawings, FIG. 6 is a three-dimensional structural view of the pressure bar assembly 214 according to some embodiments of the present application, and FIG. 7 is an enlarged view of position C in FIG. 6. Along the distribution direction of the protective plate 211 and the frame 212, a side of the pressure bar assembly 214 distant from the protective plate 211 is provided with an accommodating groove 202, and the first wall 2141 is disposed at a groove bottom of the accommodating groove 202. A portion of the first fastener 215 is accommodated in the accommodating groove 202, and along the distribution direction of the protective plate 211 and the frame 212, a side of the pressure bar assembly 214 distant from the protective plate 211 protrudes beyond an end of the first fastener 215 distant from the frame 212.

The accommodating groove 202 is a groove disposed on a side of the pressure bar assembly 214 distant from the protective plate 211 along the first direction Z. The groove bottom of the accommodating groove 202 is the groove wall of the accommodating groove 202 adjacent to the protective plate 211 along the first direction Z. At least a portion of the first wall 2141 serves as the groove bottom of the accommodating groove 202.

With the accommodating groove 202 disposed on a side of the pressure bar assembly 214 distant from the protective plate 211, the first fastener 215 may sequentially penetrate through the first wall 2141, the protective plate 211, the sealing gasket 213, and the frame 212 from the accommodating groove 202 along the first direction Z, which facilitates mutual fixation of the frame 212, the sealing gasket 213, the protective plate 211, and the pressure bar assembly 214 of the battery case 20.

Along the first direction Z, the side of the pressure bar assembly 214 distant from the protective plate 211 protrudes beyond an end of the first fastener 215 distant from the frame 212, so that the pressure bar assembly 214 provides a certain protective effect for the first fastener 215. Accordingly, under external force impact such as ball impact, the first fastener 215 is not directly subjected to external force impact under the protection of the pressure bar assembly 214. This alleviates the problem that the first fastener 215 is directly subjected to external force impact, causing damage at the first fastener 215, or even causing cracking of the frame 212 and the protective plate 211, so as to alleviate the problem of failure of the sealing effect of the battery case 20.

It should be additionally explained herein that the side of the pressure bar assembly 214 distant from the protective plate 211 may be the third wall 2143.

It should be further additionally explained herein that the first mounting hole 203 is formed at a groove bottom of the accommodating groove 202 and communicates with the accommodating groove 202.

As shown in FIGs. 2 to 5, the first fastener 215 includes a first limiting portion 2152 and a first fastening portion 2151 that are sequentially connected along the first direction Z. The first fastening portion 2151 sequentially extends through the first wall 2141, the protective plate 211, the sealing gasket 213, and the second fastener 216 along the first direction Z and is connected to the second fastener 216. The first limiting portion 2152 is positioned on a side of the first wall 2141 distant from the protective plate 211 along the first direction Z and abuts against a side of the first wall 2141 distant from the protective plate 211. The arrangement of the first limiting portion 2152 enables the first fastener 215 to be limited on the first wall 2141 along the first direction Z, so that the first fastener 215 can firmly fix the pressure bar assembly 214, the protective plate 211, the sealing gasket 213, and the frame 212.

The first limiting portion 2152 is entirely located in the accommodating groove 202, so that a side of the pressure bar assembly 214 distant from the protective plate 211 protrudes beyond an end of the first fastener 215 distant from the frame 212.

Specifically, during the operation of the battery 100, the accommodating groove 202 may trap foreign matters such as stones, which can alleviate the problem that foreign matters impact the first fastener 215, causing failure of the sealing effect of the battery case 20.

In some embodiments, referring to FIGs. 2 to 5 together and with reference to other drawings, the protective plate 211 includes a central region 2111 and a peripheral region 2112. The peripheral region 2112 surrounds the outer periphery of the central region 2111 and is connected to the central region 2111. The sealing gasket 213 is pressed against between the peripheral region 2112 and the frame 212. The first wall 2141 is disposed on a side of the peripheral region 2112 distant from the sealing gasket 213, and the first fastener 215 extends through the peripheral region 2112. The battery case 20 is provided with a first cross section a. The first cross section a is parallel to the distribution direction of the protective plate 211 and the frame 212 and penetrates through the first fastener 215. On the first cross section a, along the distribution direction of the peripheral region 2112 and the central region 2111, the accommodating groove 202 runs through an end of the pressure bar assembly 214 distant from the central region 2111.

Specifically, in the second direction X, the accommodating groove 202 runs through an end of the pressure bar assembly 214 distant from the central region 2111.

Such an arrangement enables the pressure bar assembly 214 to omit the arrangement of a wall located distant from the central region 2111 along the second direction X, so that in the second direction X, the edge of the first wall 2141 distant from the central region 2111 may be disposed as close to the first fastener 215 as possible. This reduces the dimension of the first wall 2141 along the second direction X, so as to reduce the volume and weight of the pressure bar assembly 214.

In some embodiments, referring to FIGs. 5 to 7 together and with reference to other drawings, the pressure bar assembly 214 is provided with an inner cavity 201, and the inner cavity 201 of the pressure bar assembly 214 is in communication with the accommodating groove 202.

Such an arrangement enables the pressure bar assembly 214, when subjected to external force impact, to undergo a buffering deformation through the inner cavity 201 and the accommodating groove 202, which helps absorb external force impact energy to reduce the external force impact borne by the protective plate 211, thereby helping alleviate the problem of over-compression or even breakage of the sealing gasket 213.

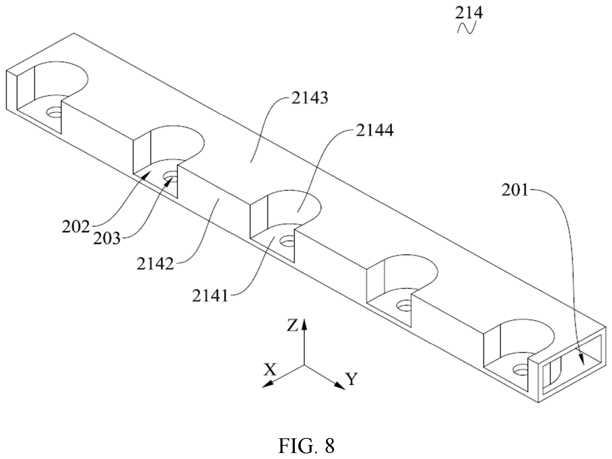

In some embodiments, referring to FIG. 8 and with reference to other drawings, FIG. 8 is a partial structural diagram of the pressure bar assembly 214 of the battery 100 according to some other embodiments of the present application. The pressure bar assembly 214 is provided with an inner cavity 201, and a fourth wall 2144 connected to the first wall 2141 is disposed between the inner cavity 201 and the accommodating groove 202.

The fourth wall 2144 is a solid wall of the pressure bar assembly 214.

With the fourth wall 2144 connected to the first wall 2141, the fourth wall 2144 may also distribute stress. This helps make the external force impact borne by the portion of the protective plate 211 facing the sealing gasket 213 become relatively uniform, and the external force impact borne by the sealing gasket 213 also become relatively uniform correspondingly, which helps alleviate the problem of local over-compression or even breakage of the sealing gasket 213.

It should be additionally explained herein that the fourth wall 2144 is also connected to the third wall 2143. That is, in the first direction Z, the fourth wall 2144 is located between the first wall 2141 and the third wall 2143 and is connected to the first wall 2141 and the third wall 2143. In this way, the third wall 2143 may be used to distribute stress.

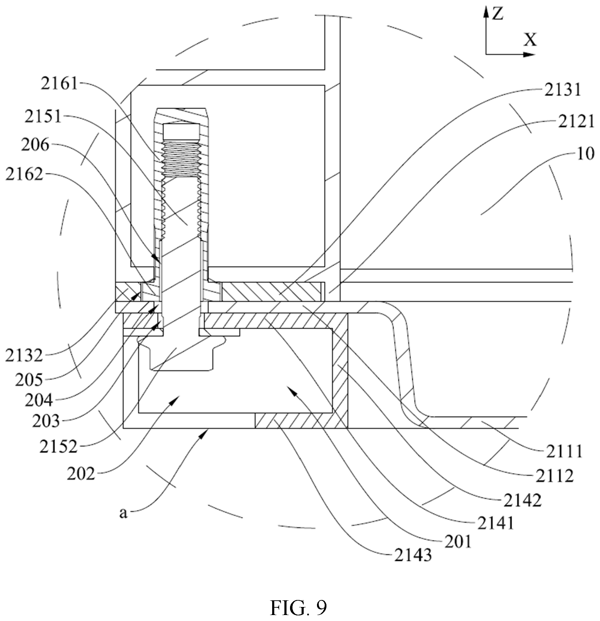

In some embodiments, referring to FIG. 9 and with reference to other drawings, FIG. 9 is a partial cross-sectional view of the battery 100 according to still some other embodiments of the present application. Along the distribution direction of the protective plate 211 and the frame 212, an end of the frame 212 adjacent to the protective plate 211 is provided with a support portion 2121, and the support portion 2121 abuts against the protective plate 211.

The support portion 2121 refers to a portion of the frame 212 protruding toward the protective plate 211 along the first direction Z.

With the support portion 2121 of the frame 212 abutting against the protective plate 211, the frame 212 may distribute stress and may achieve a certain limiting effect on the protective plate 211. This reduces the external force impact borne by the sealing gasket 213 and enables the external force impact borne by the sealing gasket 213 to be distributed extremely evenly. In this way, this helps alleviate the problem of local over-compression or even breakage of the sealing gasket 213, so as to improve the sealing effect of the sealing gasket 213.

In some embodiments, referring to FIGs. 2 to 5 together and with reference to other drawings, the protective plate 211 includes a central region 2111 and a peripheral region 2112. The peripheral region 2112 surrounds the outer periphery of the central region 2111 and is connected to the central region 2111. The sealing gasket 213 is pressed against between the peripheral region 2112 and the frame 212. The pressure bar assembly 214 is disposed on a side of the peripheral region 2112 distant from the sealing gasket 213.

In some possible designs, as shown in FIG. 4 and FIG. 5, along the distribution direction of the protective plate 211 and the frame 212, a side of the central region 2111 distant from the frame 212 is flush with a side of the pressure bar assembly 214 distant from the frame 212.

Alternatively, in some other possible designs, along the distribution direction of the protective plate 211 and the frame 212, a side of the central region 2111 distant from the frame 212 protrudes beyond a side of the pressure bar assembly 214 distant from the frame 212.

Such an arrangement enables the side of the central region 2111 distant from the frame 212 to protrude beyond or be flush with the side of the pressure bar assembly 214 distant from the sealing gasket 213, which may reduce the probability that the pressure bar assembly 214 is subjected to external force impact, thereby helping improve the sealing effect of the sealing gasket 213 to a certain extent.

Referring to FIG. 2 and with reference to other drawings, the battery 100 according to the embodiment of the present application includes a battery case 20. The battery case 20 in this embodiment is the same as the battery case 20 in the previous embodiment. For details, reference is made to the relevant description of the battery case 20 in the previous embodiment, and details are not repeated herein.

The battery 100 according to the embodiment of the present application adopts the battery case 20 involved above, which helps improve the sealing effect of the battery 100.

It should be additionally explained herein that the battery 100 may further include a battery cell 10, where the battery cell 10 is accommodated in the internal space of the battery case 20.

Specifically, the battery cell 10 and the central region 2111 of the protective plate 211 are arranged opposite to each other.

Referring to FIG. 1, the electric device according to the embodiment of the present application includes a battery case 20 or a battery 100. The battery case 20 and the battery 100 in this embodiment are the same as the battery case 20 and the battery 100 in the previous embodiment. For details, reference is made to the relevant descriptions of the battery case 20 and the battery 100 in the previous embodiment, and details are not repeated herein.

The electric device according to the embodiment of the present application adopts the battery case 20 or the battery 100 involved above, which helps improve the sealing effect of the battery 100, boosts the reliability of the battery 100, and in turn raises the reliability of the electric device.

As one embodiment of the present application, as shown in FIGs. 2 to 5, the battery case 20 includes a frame 212, a protective plate 211, a sealing gasket 213, and a pressure bar assembly 214. The protective plate 211 includes a central region 2111 and a peripheral region 2112 connected to the outer periphery of the central region 2111. The frame 212 is disposed on a side of the peripheral region 2112. The sealing gasket 213 is pressed against between the peripheral region 2112 and the frame 212. The pressure bar assembly 214 includes a first wall 2141, a second wall 2142, and a third wall 2143. The first wall 2141 abuts against a side of the peripheral region 2112 distant from the sealing gasket 213. The second wall 2142 is connected to the first wall 2141. The third wall 2143 is connected to the second wall 2142 and is disposed opposite to the first wall 2141. An orthographic projection of the first wall 2141 onto the peripheral region 2112 covers at least a portion of an orthographic projection of the sealing gasket 213 onto the peripheral region 2112, and n orthographic projection of the third wall 2143 onto the peripheral region 2112 covers at least a portion of the orthographic projection of the sealing gasket 213 onto the peripheral region 2112.

The above are merely optional embodiments of the present application and are not intended to limit the present application. For those skilled in the art, the present application may have various modifications and changes. Any modifications, equivalent replacements, improvements, and the like made within the spirit and principles of the present application shall be included in the scope of the claims of the present application.

## Claims

1. A battery case (20), comprising:
a protective plate (211);
a frame (212) disposed on a side of the protective plate (211);
a sealing gasket (213) pressed against between the frame (212) and the protective plate (211);
a pressure bar assembly (214) comprising a first wall (2141), the first wall (2141) being disposed on a side of the protective plate (211) distant from the sealing gasket (213), an orthographic projection of the first wall (2141) onto the protective plate (211) covering at least a portion of an orthographic projection of the sealing gasket (213) onto the protective plate (211); and
a first fastener (215) configured to sequentially penetrate through the first wall (2141), the protective plate (211), the sealing gasket (213), and the frame (212) along a distribution direction of the protective plate (211) and the frame (212).

2. The battery case (20) according to claim 1, wherein the pressure bar assembly (214) is provided with an inner cavity (201).

3. The battery case (20) according to claim 2, wherein the pressure bar assembly (214) further comprises:
a second wall (2142) connected to the first wall (2141) and enclosing the inner cavity (201) with the first wall (2141).

4. The battery case (20) according to claim 3, wherein the pressure bar assembly (214) further comprises a third wall (2143), the third wall (2143) is connected to the second wall (2142) and encloses the inner cavity (201) with the first wall (2141) and the second wall (2142); and along the distribution direction of the protective plate (211) and the frame (212), the third wall (2143) is spaced apart from and opposite to the first wall (2141).

5. The battery case (20) according to claim 4, wherein an orthographic projection of the third wall (2143) onto the protective plate (211) covers at least a portion of an orthographic projection of the sealing gasket (213) onto the protective plate (211).

6. The battery case (20) according to any one of claims 1 to 5, wherein the protective plate (211) comprises a central region (2111) and a peripheral region (2112) connected to an outer periphery of the central region (2111), the sealing gasket (213) is pressed against between the peripheral region (2112) and the frame (212), the first wall (2141) is disposed on a side of the peripheral region (2112) distant from the sealing gasket (213), and the first fastener (215) extends through the peripheral region (2112);
the battery case (20) is provided with a first cross section (a), and the first cross section (a) is parallel to the distribution direction of the protective plate (211) and the frame (212) and penetrates through the first fastener (215); and
on the first cross section (a), along the distribution direction of the peripheral region (2112) and the central region (2111), a portion of the sealing gasket (213) that is positioned on a side of the first fastener (215) adjacent to the central region (2111) serves as an inner sealing region (2131), and a portion of the sealing gasket (213) that is positioned on a side of the first fastener (215) distant from the central region (2111) serves as an outer sealing region (2132);
wherein an orthographic projection of the first wall (2141) onto the peripheral region (2112) covers at least a portion of an orthographic projection of the inner sealing region (2131) onto the peripheral region (2112) and at least a portion of an orthographic projection of the outer sealing region (2132) onto the peripheral region (2112).

7. The battery case (20) according to claim 6, wherein the orthographic projection of the inner sealing region (2131) onto the peripheral region (2112) falls within the orthographic projection of the first wall (2141) onto the peripheral region (2112).

8. The battery case (20) according to any one of claims 1 to 7, wherein the battery case (20) further comprises a second fastener (216), the second fastener (216) is connected to the frame (212), and the first fastener (215) sequentially penetrates through the first wall (2141), the protective plate (211), the sealing gasket (213), and the second fastener (216).

9. The battery case (20) according to claim 8, wherein along the distribution direction of the protective plate (211) and the frame (212), at least a portion of the second fastener (216) protrudes beyond an end of the frame (212) adjacent to the protective plate (211) and abuts against the protective plate (211); and the sealing gasket (213) surrounds an outer periphery of the second fastener (216).

10. The battery case (20) according to claim 8 or 9, wherein the second fastener (216) comprises a second limiting portion (2162) and a second fastening portion (2161) that are connected along the distribution direction of the protective plate (211) and the frame (212), the second fastening portion (2161) is disposed inside the frame (212); and along the distribution direction of the protective plate (211) and the frame (212), the second limiting portion (2162) is positioned at an end of the frame (212) adjacent to the protective plate (211), and an end of the second limiting portion (2162) distant from the protective plate (211) abuts against the frame (212).

11. The battery case (20) according to any one of claims 8 to 10, wherein the first fastener (215) comprises a first limiting portion (2152) and a first fastening portion (2151) that are connected along the distribution direction of the protective plate (211) and the frame (212), the first fastening portion (2151) sequentially extends through the first wall (2141), the protective plate (211), the sealing gasket (213), and the second fastener (216) and is connected to the second fastener (216); and the first limiting portion (2152) is positioned on a side of the first wall (2141) distant from the protective plate (211) and abuts against a side of the first wall (2141) distant from the protective plate (211).

12. The battery case (20) according to any one of claims 1 to 11, wherein along the distribution direction of the protective plate (211) and the frame (212), a side of the pressure bar assembly (214) distant from the protective plate (211) is provided with an accommodating groove (202), and the first wall (2141) is disposed at a groove bottom of the accommodating groove (202); and
a portion of the first fastener (215) is accommodated in the accommodating groove (202), and along the distribution direction of the protective plate (211) and the frame (212), a side of the pressure bar assembly (214) distant from the protective plate (211) protrudes beyond an end of the first fastener (215) distant from the frame (212).

13. The battery case (20) according to claim 12, wherein the protective plate (211) comprises a central region (2111) and a peripheral region (2112) connected to an outer periphery of the central region (2111), the sealing gasket (213) is pressed against between the peripheral region (2112) and the frame (212), the first wall (2141) is disposed on a side of the peripheral region (2112) distant from the sealing gasket (213), and the first fastener (215) extends through the peripheral region (2112);
the battery case (20) is provided with a first cross section (a), the first cross section (a) is parallel to the distribution direction of the protective plate (211) and the frame (212) and penetrates through the first fastener (215); and
on the first cross section (a), along the distribution direction of the peripheral region (2112) and the central region (2111), the accommodating groove (202) runs through an end of the pressure bar assembly (214) distant from the central region (2111).

14. The battery case (20) according to claim 12 or 13, wherein the pressure bar assembly (214) is provided with an inner cavity (201), and a fourth wall (2144) connected to the first wall (2141) is disposed between the inner cavity (201) and the accommodating groove (202).

15. The battery case (20) according to any one of claims 1 to 14, wherein along the distribution direction of the protective plate (211) and the frame (212), an end of the frame (212) adjacent to the protective plate (211) is provided with a support portion (2121), and the support portion (2121) abuts against the protective plate (211).

16. The battery case (20) according to any one of claims 1 to 15, wherein the protective plate (211) comprises a central region (2111) and a peripheral region (2112) connected to an outer periphery of the central region (2111), the sealing gasket (213) is pressed against between the peripheral region (2112) and the frame (212), and the pressure bar assembly (214) is disposed on a side of the peripheral region (2112) distant from the sealing gasket (213);
wherein, along the distribution direction of the protective plate (211) and the frame (212), a side of the central region (2111) distant from the frame (212) is flush with or protrudes beyond a side of the pressure bar assembly (214) distant from the frame (212).

17. A battery (100), comprising the battery case (20) according to any one of claims 1 to 16.

18. An electric device, comprising the battery case (20) according to any one of claims 1 to 16; or comprising the battery (100) according to claim 17.
